# EUROPÄISCHE PATENTSCHRIFT

(11) **EP 4 506 597 B1**
(45) Veröffentlichungstag und Bekanntmachung des Hinweises auf die Patenterteilung: **28.01.2026**
(21) Anmeldenummer: 24160266.3
(22) Anmeldetag: 28.02.2024
(51) Int. Cl.: F16J 15/12, F16L 23/18

(54) **SEMIMETALLDICHTUNG**
SEMI-METAL SEAL
JOINT SEMI-MÉTALLIQUE

(30) Priorität: 08.08.2023 DE 102023121100
(43) Veröffentlichungstag der Anmeldung: 12.02.2025
(73) Patentinhaber: Klinger A.W. Schultze GmbH, 21502 Geesthacht (DE)
(72) Erfinder: LORENZ, Maik, 22399 Hamburg (DE)
(74) Vertreter: Müller Verweyen

(56) Entgegenhaltungen:
- EP-B1- 2 310 722
- DE-A1- 102020 108 722
- DE-B1- 2 756 351
- US-A1- 2004 118 510

## Beschreibung

Die vorliegende Erfindung betrifft einen Semimetalldichtung mit den Merkmalen des Oberbegriffs von Anspruch 1.

Semimetalldichtungen der gattungsgemäßen Art werden in Ringform im Allgemeinen zur Abdichtung eines ringförmigen Spaltes zwischen zwei gegenüberliegenden Dichtflächen zweier Flansche genutzt, welche an den Endseiten jeweils eines Rohres z.B. durch eine Schweißverbindung befestigt sind. Solche Flansche sind z.B. in der europäischen Norm EN 1092 technisch definiert. Die Flansche sind über eine Mehrzahl von Schrauben in einem radial äußeren Abschnitt auf einem Lochkreis miteinander verbunden. Die Semimetalldichtung ist ringförmig ausgebildet, wobei der Innendurchmesser der Semimetalldichtung so bemessen ist, dass die Semimetalldichtung nicht in den freien Strömungsquerschnitt der zu verbindenden Rohre hineinragt. Damit die Semimetalldichtung nicht radial verrutscht und dadurch in den freien Strömungsquerschnitt der Rohre hineinragt, ist die Semimetalldichtung mit dem Außendurchmesser so bemessen, dass sie sich an den Radialinnenseiten Schrauben abstützt und dadurch zentriert wird. Nach dem Einlegen der Semimetalldichtung und dem Verspannen der Flansche über die Befestigungsschrauben liegt die Semimetalldichtung unter Ausübung einer Flächenpressung beidseitig an jeweils einer Dichtfläche jeweils eines Flansches an und dichtet so den Spalt zwischen den Flanschen gegenüber der Umgebung ab.

Semimetalldichtungen der Anmelderin haben sich in verschiedenen Industriebereichen auch bei schwierigsten Dichtaufgaben bewährt und werden z.B. in konventionellen Kraftwerken, im Primärkreislauf von Kernkraftwerken, als Wärmetauscher-Dichtung, als Armaturendeckeldichtung oder als Mannlochdeckel-Dichtung am Dampferzeuger bzw. am Druckhalter verwendet. Ferner haben sich die Semimetalldichtungen auch in der chemischen oder petrochemischen Industrie bewährt. Solche Semimetalldichtungen sind z.B. auf der Internetseite https://www.klinger-awschultze.de/produkte/dichtungen/metall-weichstoff-dichtungen/kammprofilierte-dichtungen/ veröffentlicht, wobei eine Ausführungsform durch eine Kammprofildichtung gebildet ist.

Die Semimetalldichtung selbst umfasst einen formstabilen profilierten Metallkern, welcher zu einer Vermeidung von Beschädigungen der Flansche mit einer Weichstoffauflage aus PTFE, Graphit, Aluminium oder Silber versehen ist. Ferner dient die Weichstoffauflage zu einer verbesserten Abdichtung des Spaltes bei gleichzeitig geringeren Mindestflächenpressungen. Dabei wird der Werkstoff der Weichstoffauflage bei dem Verspannen der Flansche in die Profilierung des Metallkerns der Semimetalldichtung hineingedrückt und gleichzeitig unter Ausübung einer Flächenpressung dichtend an die Dichtflächen der Flansche angepresst.

Der profilierte Metallkern weist eine Profilierung in Form einer kammartig profilierten Rillenstruktur mit ringförmigen Rillen in der Oberfläche auf, wobei die Spitzen der Rillenstruktur und die Grundflächen der Rillenstruktur zwischen den Spitzen in der Querschnittsfläche in radialer Schnittrichtung bei einer Standarddichtung in zwei parallel zueinander angeordneten Ebenen bilden, indem die Spitzen des Profils über die Oberfläche des Metallkerns hinweg eine konstante Höhe und Tiefe zu der Mittenebene des Metallkerns aufweisen. Damit ergibt sich nach dem Einbau und dem Verspannen der Semimetalldichtung eine nahezu konstante Flächenpressung mit einer identischen Flächenpressung in der Weichstoffauflage und dem Metallkern über die gesamte radiale Erstreckung der Profilierungen.

Eine verbesserte Dichtwirkung kann durch ballige Semimetalldichtungen erreicht werden, bei denen der Metallkern keine konstante Dicke aufweist, sondern stattdessen ballig mit einer vergrößerten Dicke in der Mitte und einer abnehmenden Dicke zu den Randseiten hin ausgebildet ist. Die Profilierung der Rillenstruktur ist dann so ausgebildet, dass die Spitzen der Rillen eine plane Oberfläche bilden, indem die Tiefe der Rillen oder die Höhe der Spitzen ausgehend von dem balligen Metallkern zur Bildung der planen Oberfläche ausgehend von der Mitte zu den radialen Randseiten des Metallkerns hin zunehmen.

Aus der Druckschrift DE 27 56 351 B1 ist eine Dichtungsanordnung für Flanschdichtungen mit einer dort als Kammdichtungselement bezeichneten Semimetalldichtung bekannt, bei der das Kammdichtungselement einen Grundkörper mit einer zumindest einseitig nach außen konvexen Querschnittslängsseite aufweist, die von den Tälern der Dichtungsprofilierung tangiert wird. Der Vorteil dieser Profilierung ist darin zu sehen, dass ein bestimmter Dichtzustand mit geringeren Dichtkräften eingestellt werden kann.

Die Semimetalldichtung muss zur Verwirklichung der erforderlichen Dichtwirkung im Bereich der Dichtflächen der Flansche möglichst dichtend anliegen, wozu eine bestimmte Mindestflächenpressung erforderlich ist. Gleichzeitig muss verhindert werden, dass die Semimetalldichtung durch ein Verschieben in den freien Leitungsquerschnitt der zu verbindenden Rohre hineinragt. Eine Lösung, um dieses Verschieben zu verhindern liegt darin, dass die Semimetalldichtung zentrierend an den radial inneren Randseiten der die Flansche miteinander verbindenden Befestigungsschrauben anliegt. Hierzu weist die Semimetalldichtung radial außen einen Zentrierrand auf, der keine Dichtfunktion aufweist. Der Zentrierrand ist mit seinem Außendurchmesser so bemessen, dass er radial innen an den Befestigungsschrauben anliegt und dadurch die Semimetalldichtung in ihrer Soll-Position hält. Der Zentrierrand bildet damit mit seinem Außendurchmesser einen Zentrierdurchmesser für die Zentrierung der Semimetalldichtung. Da der Zentrierrand nur für die Zentrierung der Semimetalldichtung vorgesehen ist und selbst keine Dichtfunktion hat, ist dieser speziell zur Anlage an den radial inneren Seiten der Befestigungsschrauben ausgelegt. Dabei ist der Zentrierrand in der Dicke so bemessen, dass zwischen dem Zentrierrand und die Stirnflächen des Flansches ein geringfügiger Spalt vorhanden, damit die Semimetalldichtung in jedem Fall mit der Außenseite an den Innenseiten der Befestigungsschrauben zentrierend zur Anlage gelangt und nicht mit den Seitenflächen des Zentrierrandes an den Seitenflächen der Flansche in einer nichtzentrierten Lage fixiert wird. Ferner darf der Zentrierrand in keinem Fall die Dichtfunktion der Semimetalldichtung beeinflussen, indem er durch seine Steifigkeit und eine mögliche Schieflage eine dichtende Anlage der Semimetalldichtung an den Dichtflächen der Flansche verhindert. Damit ist der Zentrierrand bewusst etwas schwächer als der Metallkern und etwas dünner als der Spalt zwischen den Flanschen ausgebildet, so dass seitlich zwischen den Oberflächen des Zentrierrandes und den gegenüberliegenden Seitenflächen der Flansche jeweils ein geringfügiger Spalt vorhanden ist. Nachteilig bei dieser Lösung ist, dass sich in diesen Spalten Schmutzpartikel oder Flüssigkeiten wie z.B. Wasser ansammeln können, die ihrerseits zu einer Verschmutzung und einer Korrosion der Flansche führen können, die letztlich auch die Dichtwirkung der Semimetalldichtung nachteilig beeinflussen können. Sofern der Zentrierrand und der Metallkern einstückig ausgebildet sind, ist es ferner erforderlich den Zentrierrand in einem aufwendigen Bearbeitungsprozess durch eine spanende Bearbeitung herzustellen, wobei er insbesondere auf die erheblich geringere Dicke abgedreht werden muss.

Vor diesem Hintergrund liegt der Erfindung die Aufgabe zugrunden, eine kostengünstigere Semimetalldichtung bereitzustellen, welche bei einer verringerten Wahrscheinlichkeit einer Korrosion und Verschmutzung der Flansche im Bereich des Spaltes im Einbauzustand eine gute Dichtwirkung aufweisen soll und gleichzeitig bei der Montage prozesssicher zentriert wird.

Zur Lösung der Aufgabe wird erfindungsgemäß eine Semimetalldichtung mit den Merkmalen von Anspruch 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass der Metallkern mit seiner Radialaußenseite einen Zentrierdurchmesser der Semimetalldichtung bildet, und die Spitzen der rillenförmigen Profilierungen im Querschnitt eine Wellenform mit einem Radius von 0,4 bis 0,8 mm aufweisen, und die radial aufeinander folgenden Spitzen der rillenförmigen Profilierungen einen Abstand von 1,0 bis 2,5 mm zueinander aufweisen, und die Rillen zwischen den radial aufeinander folgenden Spitzen der rillenförmigen Profilierungen eine Tiefe von 0,2 bis 0,8 mm aufweisen.

Gemäß der vorgeschlagenen Lösung bildet der Metallkern selbst den Zentrierdurchmesser, er erstreckt sich also bis zu den Radialinnenseiten der Befestigungsschrauben. Damit entfällt der bisher vorgesehen Zentrierring, wodurch die Fertigungskosten reduziert werden. Außerdem weist der Metallkern die rillenförmige Profilierung mit der darauf angeordneten Weichstoffauflage bis zu seiner Radialaußenseite hin auf, so dass hierdurch die noch vorhandenen Spalte zwischen der Semimetalldichtung und den Dichtflächen der Flansche verringert und im Idealfall bei einer Anlage der Weichstoffauflage an den Dichtflächen sogar auf Null reduziert werden. Damit ist die Wahrscheinlichkeit einer Verschmutzung und einer Korrosion der Flansche zumindest erheblich reduziert.

Weiter wird vorgeschlagen, dass die Spitzen der rillenförmigen Profilierungen im Querschnitt eine Wellenform mit einem Radius von 0,4 bis 0,8 mm aufweisen. Die Spitzen sind damit zu einer Wellenform gerundet, welche eine Wiederverwendung der Semimetalldichtung vereinfacht, da hierdurch die Weichstoffauflage sehr viel einfacher von dem Metallkern gelöst werden kann, und der Metallkern als solches einfacher zur Aufbringung einer neuen Weichstoffauflage gereinigt werden kann.

Weiter wird vorgeschlagen, dass die radial aufeinander folgenden Spitzen der rillenförmigen Profilierungen einen Abstand von 1,0 bis 2,5 mm zueinander aufweisen. Durch den vorgeschlagenen Abstand der Spitzen sind die dazwischen vorgesehenen Rillen so breit, dass die Weichstoffauflage nach einer Verwendung der Semimetalldichtung vereinfacht gelöst und die Weichstoffrückstände vereinfacht aus dem Grund der Rillen entfernt werden können. Die Semimetalldichtung kann damit wesentlich einfacher für eine Wiederverwendung aufgearbeitet werden, wobei der Metallkern als das erheblich teuerste Teil der Semimetalldichtung im Sinne einer verbesserten Nachhaltigkeit wiederverwendet werden kann.

Weiter wird vorgeschlagen, dass die Rillen zwischen den radial aufeinander folgenden Spitzen der rillenförmigen Profilierungen eine Tiefe von 0,2 bis 0,8 mm aufweisen. Auch durch die vorgeschlagene Tiefe der Rillen der Profilierungen wird eine verbesserte Reinigung des Metallkerns der Semimetalldichtung für eine Wiederverwendung ermöglicht.

Durch die abnehmende Höhe der Spitzen in Bezug zu der Mitteneben des Metallkerns weisen die rillenförmigen Profilierungen im Gegensatz zu der aus dem Stand der Technik bekannten Profilierungen bewusst in der durch die Spitzen der Wellprofilierungen definierten Außenform eine ballige Formgebung auf, so dass die Semimetalldichtung nach dem Verspannen bewusst im Bereich eines Dichtabschnittes mit einer erhöhten Flächenpressung zur Anlage an den Dichtflächen der miteinander zu verbindenden Flansche gelangt, um die gewünschte Dichtwirkung zu erreichen. Dabei liegt die Semimetalldichtung im Bereich des Dichtabschnitts mit einer erhöhten Flächenpressung an den Dichtflächen der Flansche an, während sie in dem radial äußeren Abschnitt des Metallkerns mit den Spitzen der geringeren Höhe nur soweit komprimiert wird, dass sie den vorhandenen Spalt verringert, verschließt oder mit einer sehr viel geringeren Flächenpressung an den Oberflächen der Flansche anliegt. Vor dem Verspannen der Flansche liegt die Semimetalldichtung nur mit dem Dichtabschnitt an den Dichtflächen an. Dies ist auch hinsichtlich der Zentrierung der Semimetalldichtung von Vorteil, da sie aufgrund der geringeren Auflagefläche der Semimetalldichtung an den Dichtflächen vor dem Verspannen geringeren Reibkräften ausgesetzt ist und sich dadurch vereinfacht ausrichtet und durch die Anlage des Metallkerns mit seiner Radialaußenseite an den inneren Randseiten der Befestigungsschrauben zentriert.

Die vorgeschlagene Semimetalldichtung weist damit als Grundbauteile lediglich einen einstückigen Metallkern mit darauf angeordneten Weichstoffauflagen auf und ist damit erheblich kostengünstiger zu fertigen, wobei die Semimetalldichtung zusätzlich aufgrund der vorgeschlagenen Formgebung eine verbesserte Dichtwirkung aufweist und sich beim Einlegen selbst zentriert. Eine möglicherweise bisher erforderliche spanende Bearbeitung des vorzusehenden Zentrierringes entfällt damit. Außerdem kann die Semimetalldichtung nach einer Verwendung durch ein Entfernen der Weichstoffauflage, einer möglicherweise erforderlichen Reinigung des Metallkerns und einer Neuaufbringung einer neuen Weichstoffauflage für eine Wiederverwendung aufgearbeitet werden.

Dabei kann die Semimetalldichtung mit der balligen Ausführung der rillenförmigen Profilierung durch eine Weichstoffauflage konstanter Dicke bewusst mit einer im Querschnitt balligen Außenform versehen werden, so dass die in dem mittigen Dichtabschnitt erhöhte Flächenpressung allein oder zumindest im Wesentlichen durch die Formgebung des Metallkerns definiert ist. Die Weichstoffauflage bildet damit nur eine Schicht konstanter Dicke, welche abgesehen von ihren Werkstoffeigenschaften keinen weiteren Anforderungen unterliegt und damit vereinfacht aufzubringen ist.

Weiter wird vorgeschlagen, dass die gemittelte Dicke der Weichstoffauflage zu dem Metallkern hin größer ist als die Differenz zwischen den maximalen Höhen der Spitzen des Dichtabschnitts und den minimalen Höhen der Spitzen in dem radial äußeren Abschnitt des Metallkerns. Durch die vorgeschlagene Bemessung der Dicke der Weichstoffauflage wird es ermöglicht, dass die Semimetalldichtung mit der gesamten Seitenfläche bis zu ihrem radial äußeren Rand zur Anlage an der Seitenfläche des gegenüberliegenden Flansches gelangt, ohne dass der Metallkern die Weichstoffauflage mit seiner Profilierung vollständig durchdringt und mit den Spitzen direkt zur Anlage an der gegenüberliegenden Dichtfläche des Flansches gelangt.

Weiter wird vorgeschlagen, dass die Differenz der Höhe der Spitzen des Dichtabschnitts zu der Höhe der Spitzen in dem radial äußeren Abschnitt des Metallkerns bevorzugt 0,1 bis 0,3 mm beträgt. Durch die vorgeschlagene Höhendifferenz kann die Dichtfunktion der Semimetalldichtung bei einem gleichzeitig sicheren Verschließen der Spalte ermöglicht werden.

Weiter wird vorgeschlagen, dass die Dicke der Weichstoffauflage größer ist als die maximale Tiefe zwischen den Spitzen der rillenförmigen Profilierung. Durch die vorgeschlagene Lösung wird zusätzlich verhindert das der Metallkern die Weichstoffauflage mit seiner Profilierung vollständig durchdringt und mit den Spitzen direkt zur Anlage an der gegenüberliegenden Dichtfläche des Flansches gelangt.

Weiter wird vorgeschlagen, dass der Metallkern ausgehend von dem Dichtabschnitt zur Radialaußenseite und/oder zur Radialinnenseite hin eine abnehmende Dicke aufweist. Durch die vorgeschlagene Weiterentwicklung wird die ballige Formgebung der rillenförmigen Profilierung weiter unterstützt, und die Dichtwirkung kann weiter verbessert werden.

Weiter wird vorgeschlagen, dass der Abschnitt, in dem die Dicke des Metallkerns ausgehend von dem Dichtabschnitt zur Radialaußenseite hin abnimmt, eine größere radiale Erstreckung aufweist als der Abschnitt, in dem die Dicke des Metallkerns ausgehend von dem Dichtabschnitt zur Radialinnenseite hin abnimmt. Durch die vorgeschlagene Weiterentwicklung wird der Dichtabschnitt in der Semimetalldichtung zur Radialinnenseite der Semimetalldichtung also zu dem freien Rohrleitungsquerschnitt hin versetzt. Damit kann die Dichtwirkung weiter verbessert werden. Außerdem ist eine solche Versetzung des Dichtabschnittes günstig für die in der Semimetalldichtung wirkenden Spannungen beim Verspannen der Flansche über die radial äußeren Befestigungsschrauben.

Die Erfindung wird im Folgenden anhand bevorzugter Ausführungsformen unter Bezugnahme auf die beigefügten Figuren erläutert. Dabei zeigt
- Fig. 1: eine erfindungsgemäße Semimetalldichtung im Einbauzustand; und
- Fig. 2: einen vergrößerten Ausschnitt der Semimetalldichtung zwischen zwei Dichtflächen zweier Flansche vor dem Verspannen; und
- Fig. 3: einen vergrößerten Ausschnitt der Semimetalldichtung zwischen zwei Dichtflächen zweier Flansche nach dem Verspannen.

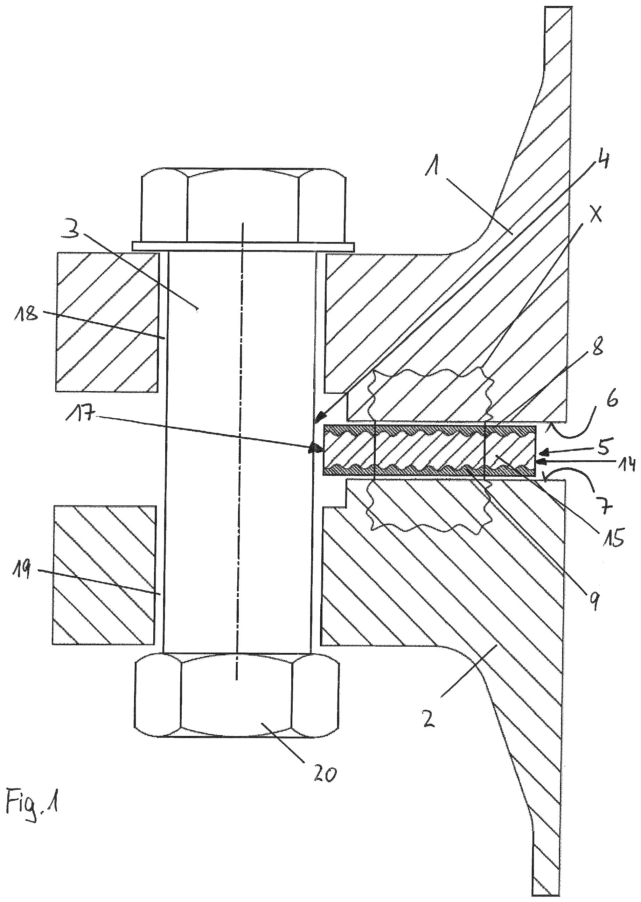

In der Figur 1 ist eine erfindungsgemäße Semimetalldichtung 5 zu erkennen, welche zwischen zwei Dichtflächen 6 und 7 zweier Flansche 1 und 2 angeordnet ist. Die Flansche 1 und 2 sind geschmiedete Rohteile und werden im Bereich der Dichtflächen 6 und 7 einer gesonderten Oberflächenbearbeitung unterzogen, so dass die Dichtflächen 6 und 7 eine entsprechende Oberflächengenauigkeit aufweisen. Die Flansche 1 und 2 werden dazu im Bereich der Dichtflächen 6 und 7 entsprechend spanend bearbeitet und sofern erforderlich geschliffen. Die Flansche 1 und 2 sind z.B. entsprechend der DIN EN 1092 bemessen und dienen zur Verbindung zweier nicht dargestellter Rohrleitungen. Die Flansche 1 und 2 sind ringförmig ausgebildet, wobei in der Figur 1 nur eine Seite der Flansche 1 und 2 im Bereich ihrer Befestigung dargestellt ist. Zur Verbindung der Flansche 1 und 2 weisen diese in ihren radial äußeren Abschnitten eine Mehrzahl von auf einem identischen Durchmesser angeordnete Öffnungen 18 und 19 auf. Zur Befestigung der Flansche 1 und 2 sind Befestigungsschrauben 3 vorgesehen, welche die Öffnungen 18 und 19 durchgreifen und über auf die freien Enden aufgeschraubte Muttern 20 in bekannter Weise verspannt sind.

Die Semimetalldichtung 5 ist ringförmig ausgebildet und weist einen ringförmigen und scheibenförmigen Metallkern 15 auf, welcher auf beiden axialen Seitenflächen eine Weichstoffauflage 8 und 9 aufweist, mit denen die Semimetalldichtung 5 an den Dichtflächen 6 und 7 anliegt. Der ringförmige Metallkern 15 ist so bemessen, dass er mit seiner Radialaußenseite 17 in einer zentrierten Stellung der Semimetalldichtung 5 an den Radialinnenseiten 4 der Befestigungsschrauben 3 anliegt, während seine freie Radialinnenseite 14 dem freien Rohrleitungsquerschnitt zugewandt ist. Der in der Figur 1 zu erkennende kleine Spalt ist lediglich der vergrößerten Darstellung geschuldet, wobei ein kleiner Spalt auch vorgesehen sein kann, soweit die Semimetalldichtung 5 in allen möglichen Stellungen so angeordnet ist, dass sie nicht in den freien Rohrleitungsquerschnitt der Rohrleitungen hineinragt.

Die Weichstoffauflagen 8 und 9 sind aus einem weicheren Werkstoff als der Metallkern 15 ausgebildet und können z.B. aus PTFE, Graphit, Aluminium oder Silber hergestellt sein, je nach der Beschaffenheit des abzudichtenden Mediums und den Anforderungen an die Dichtheit als solches. Die Weichstoffauflagen 8 und 9 können auch aus einer Graphitschicht mit einer Edelstahlauflage gebildet sein, wobei zusätzlich zwischen der Graphitschicht und der Edelstahlauflage eine dünne PTFE-Schicht vorgesehen sein kann.

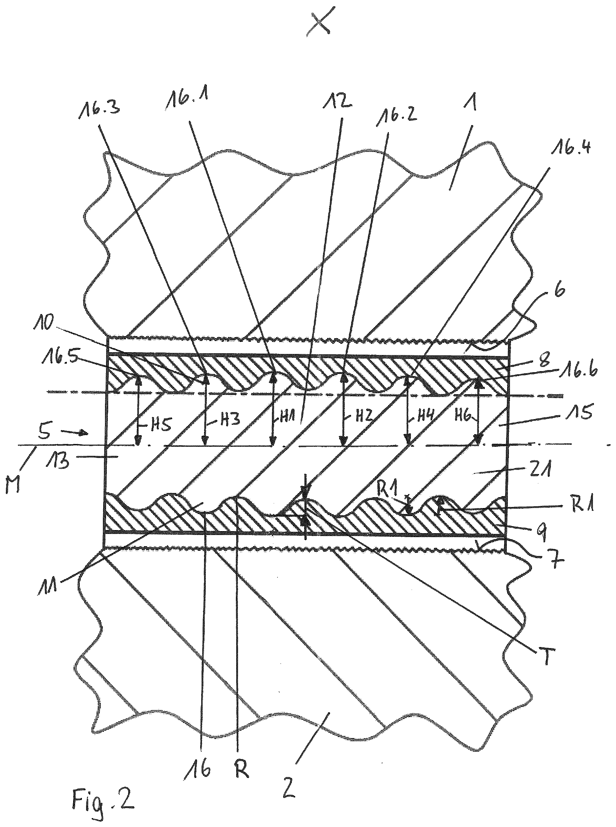

In der Figur 2 ist ein vergrößerter Ausschnitt X der Figur 1 der Semimetalldichtung 5 vor dem Verspannen der Befestigungsschrauben 3 zu erkennen. Die Semimetalldichtung 5 weist in ihrem Grundaufbau den Metallkern 15 auf, welcher an beiden axialen Seitenflächen jeweils eine rillenförmige Profilierung 10 und 11 aufweist. Die rillenförmigen Profilierungen 10 und 11 können durch verschiedene Geometrien wie z.B. spiralförmige Rillen R oder ringförmige Rillen R als Convex-Bauform verwirklicht sein. Die in den rillenförmigen Profilierungen 10 und 11 umlaufenden Spitzen 16 mit den dazwischen angeordneten Rillen R sind in der Schnittdarstellung in Form eines Wellenprofils zu erkennen.

Der Metallkern 15 ist scheibenförmig ausgebildet und an den seitlichen Oberflächen durch jeweils eine Weichstoffauflage 8 und 9 abgedeckt. Die Spitzen 16 der Profilierungen 10 und 11 weisen eine Höhe H in Bezug zu der Mittenachse M des Metallkerns 15 auf, während die Rillen R zwischen den Spitzen 16 eine Tiefe T von der Spitzenaußenseite bis zu dem Rillengrund aufweisen.

Die Höhe H der Spitzen 16 der Profilierungen 10 und 11 nimmt ausgehend von einem Dichtabschnitt 12 in der aufeinander folgenden Reihenfolge in Richtung zur Radialaußenseite 17 des Metallkerns 15 hin ab, was anhand der kleiner werdenden Höhen H1, H3 und H5 der aufeinander folgenden Spitzen 16.1, 16.3 und 16.5 zur Radialaußenseite 17 hin in dem radial äußeren Abschnitt 13 des Metallkerns 15 zu erkennen ist. Ferner nimmt die Höhe H der Spitzen 16 der Profilierungen 10 und 11 ausgehend von dem Dichtabschnitt 12 in der aufeinander folgenden Reihenfolge in Richtung zur Radialinnenseite 14 hin in dem radial inneren Abschnitt 21 des Metallkerns 15 ab, was anhand der kleiner werdenden Höhen H2, H4 und H6 der aufeinander folgenden Spitzen 16.2, 16.4 und 16.6 zu erkennen ist.

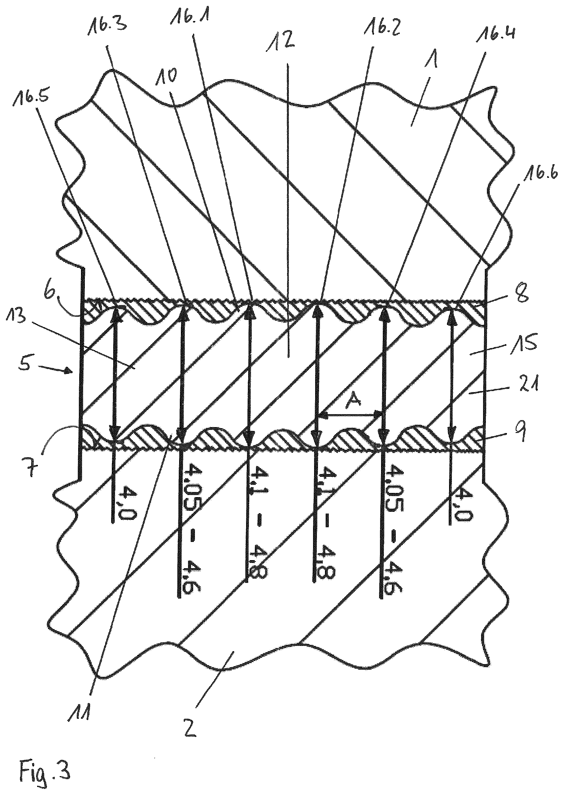

In dem Dichtabschnitt 12 weisen die Profilierungen 10 und 11 zwei Spitzen 16.1 und 16.2 auf, welche eine größte und identische Höhe H1 und H2 aufweisen. Selbstverständlich können im Bereich des Dichtabschnittes 12 oder auch in dem radial äußeren Abschnitt 13 und dem radial inneren Abschnitt 21 auch zwei oder mehrere nebeneinander angeordnete Spitzen 16 eine identische Höhe H aufweisen, soweit größere Flächenbereiche der Semimetalldichtung 5 mit identischen Dichtungseigenschaften geschaffen werden sollen. Die Höhe H der Spitzen 16 ist in der Figur 3 stellvertretend durch die Abstände der paarweise gegenüberliegenden Spitzen 16 der beiden Profilierungen 10 und 11 dargestellt. Dabei weisen die paarweise gegenüberliegenden Spitzen 16.1, 16.2 des Dichtabschnittes 12 einen Abstand von 4,1 bis 4,8 mm, die angrenzenden Spitzen 16.3, 16.4 einen Abstand von 4,05 bis 4,6 mm und die Spitzen 16.5, 16.6 einen Abstand von 4,0 mm zueinander auf. Die Abstände sind Bereichsangaben und stellen lediglich bevorzugte Abmessungen auf, wobei die Höhendifferenz der aufeinander folgenden Spitzen 16 selbstverständlich wie oben beschrieben verwirklicht ist.

In der Figur 3 ist der Ausschnitt X der Figur 2 im verspannten Zustand der Semimetalldichtung 5 zu erkennen. Die Semimetalldichtung 5 liegt aufgrund der von den Befestigungsschrauben 3 ausgeübten Spannkraft dichtend mit den Weichstoffauflagen 8 und 9 an den Dichtflächen 6 und 7 der Flansche 1 und 2 an. Die Weichstoffauflagen 8 und 9 sind aufgrund der wirkenden Flächenpressung in die rillenförmigen Profilierungen 10 und 11 eingepresst. Dabei wirkt in dem Dichtabschnitt 12 der Semimetalldichtung 5 aufgrund der Spitzen 16.1 und 16.2 mit der größeren Höhe H eine hohe Flächenpresskraft, wobei die Spitzen 16.1 und 16.2 die Weichstoffauflagen 8 und 9 fast vollständig durchdringen. Sofern die Weichstoffauflagen 8 und 9 mehrlagig mit einer Graphitschicht, einer Edelstahlauflage und ggf. mit einer dazwischen vorgesehenen PTFE-Schicht gebildet sind, durchdringen die Spitzen 16 der Profilierungen 10 und 11 die Weichstoffauflagen 8 und 9 durch die Graphitschicht und ggf. durch die PTFE-Schicht hindurch bis zu der Edelstahlauflage. Damit wird die zu erreichende Dichtwirkung der Semimetalldichtung 5 bewusst durch die Auslegung der Spitzen 16.1 und 16.2 der Profilierungen 10 und 11 in dem Dichtabschnitt 12 aufgrund der dort wirkenden hohen Flächenpressung bewirkt. In dem radial äußeren Abschnitt 13 und in dem radial inneren Abschnitt 21 wirkt aufgrund der Spitzen 16.3, 16.4, 16.5 und 16.6 mit der geringeren Höhe H3 bis H6 eine geringere Flächenpresskraft, so dass diese Abschnitte noch eine Dichtwirkung haben, welche aber geringer ist. Der Dichtabschnitt 12 ist in der durch die Höhe H1 und H2 der Spitzen 16.1 und 16.2 definierten lokalen Anpresskraft so ausgelegt, dass er die eigentliche Dichtfunktion der Semimetalldichtung 5 wahrnimmt, wobei die Dichtzone der Semimetalldichtung 5 durch die Anordnung des Dichtabschnittes 12 bzw. der Spitzen 16.1 und 16.2 relativ in der Semimetalldichtung 5 definiert ist.

Aufgrund der erfindungsgemäßen Ausbildung der Semimetalldichtung 5 liegt diese auch in den radialen inneren und äußeren Abschnitten 21 und 13 mit den Weichstoffauflagen 8 und 9 an den Dichtflächen 6 und 7 an, wobei hier eine erheblich geringere Flächenpresskraft wirkt. Aufgrund des Anliegens der Semimetalldichtung 5 in diesen Bereichen wird ein bisher vorhandener Spalt reduziert und im Idealfall geschlossen, so dass sich hier keine Schmutzpartikel und keine Feuchtigkeit ansammeln können. Damit wird eine Korrosion und eine Verschmutzung der Flansche 1 und 2 in diesen Bereichen der Dichtflächen 6 und 7 vermieden. Damit wird der Aufwand einer Aufarbeitung und/oder Reinigung der Flansche 1 und 2 nach dem Ausbau der Semimetalldichtung 5 und vor dem Einbau einer neuen Semimetalldichtung 5 erheblich reduziert. Im Idealfall wird es dadurch sogar ermöglicht, dass auf eine Aufarbeitung und Reinigung der Flansche 1 und 2 vor dem Einsetzen einer neuen oder aufgearbeiteten Semimetalldichtung 5 sogar vollständig verzichtet werden kann. Dies ist insbesondere in komplexen Rohrleitungssystemen von Vorteil, in denen die Rohrleitungen nach dem Lösen der Flansche 1 und 2 nicht beliebig oder nur mit einem sehr großen Aufwand zum Freilegen der Dichtflächen 6 und 7 auseinandergezogen werden können.

Ein Vorteil der erfindungsgemäßen Semimetalldichtung 5 liegt darin, dass die Herstellungskosten aufgrund des entfallenden Zentrierringes erheblich reduziert werden, was dadurch ermöglicht wird, indem sich die Semimetalldichtung 5 über den Metallkern 15 selbst zentriert. Zusätzlich wird diese vergrößerte radiale Erstreckung des Metallkerns 15 dazu genutzt, die Profilierungen 10 und 11 mit den darauf vorgesehene Weichstoffauflagen 8 und 9 in ihren radialen Erstreckungen ebenfalls zu vergrößern und dadurch die Spalte zwischen den Dichtflächen 6,7 und der Semimetalldichtung 5 zu verringern und im Idealfall zu verschließen.

Dabei wird die Semimetalldichtung 5 durch die Formgebung der Profilierungen 10 und 11 gezielt so ausgelegt, dass sie im Bereich des Dichtabschnittes 12 die Dichtfunktion durch die Spitzen 16 mit der größeren Höhe H wahrnimmt. Diese größere Höhe H der Spitzen 16 im Bereich des Dichtabschnitts 12 kann sowohl durch eine Auslegung der Spitzen 16 der Profilierungen 10 und 11 auf einem Metallkern 15 mit einer konstanten Dicke als auch durch eine ballige Formgebung des Metallkerns 15 erreicht werden, wobei die Rillen R in diesen Fall auch eine konstante Tiefe T aufweisen können. Ferner kann die Form der rillenförmigen Profilierungen 10 und 11 auch durch eine Kombination aus einem balligen Metallkern 15 mit rillenförmigen Wellprofilierungen 10 und 11 mit Rillen mit einer radial nach außen und nachinnen von dem Dichtabschnitt 12 ausgehenden zunehmenden Tiefe T erreicht werden.

Es hat sich herausgestellt, dass eine Bemessung der Profilierungen 10 und 11 mit einer Höhendifferenz von 0,1 bis 0,3 zwischen den Spitzen 16.1 und 16.2 des Dichtabschnitts 12 und den Spitzen 16.3, 16.4, 16.5 und 16.6 des radial äußeren Abschnitts 13 bzw. des radial inneren Abschnitts 21 ausreichend ist, um sowohl die gewünschte Dichtfunktion als auch das Verschließen der Spalte zu realisieren. Dabei ist es bevorzugt, dass der radial äußere Abschnitt 13 ausgehend von dem Dichtabschnitt 12 eine größere radiale Erstreckung aufweist als der radial innere Abschnitt 21 ausgehend von dem Dichtabschnitt 12 nach innen. Damit ist der Dichtabschnitt 12 in der Semimetalldichtung 5 in Bezug zu einem Mittenradius der Semimetalldichtung 5 radial nach innen in Richtung des abzudichtenden freien Rohrleitungsquerschnitt versetzt. Dadurch können günstigere Kräfteverhältnisse in der Semimetalldichtung 5 bei einer gleichzeitig verbesserten Dichtung realisiert werden.

Da die Profilierungen 10 und 11 beidseitig an dem Metallkern 15 vorgesehen sind, können die unterschiedlichen Höhen H der Spitzen 16 auch als unterschiedliche Dicken des Metallkerns 15 im Bereich der Spitzen 16 der Profilierungen 10 und 11 angesehen werden, wobei die Profilierungen 10 und 11 bevorzugt identisch und symmetrisch zu der Mittenebene M ausgebildet sind.

Die Spitzen 16 der rillenförmigen Profilierungen 10,11 weisen im Querschnitt eine Wellenform mit einem Radius R1 von 0,4 bis 0,8 mm auf, wie in der Figur 2 zu erkennen ist. Die Spitzen 16 sind damit zu einer Wellenform mit einem entsprechend großen Radius im Vergleich zu den bisher verwendeten eher scharfen Spitzen 16 geformt, so dass die Profilierungen 10 und 11 auch als Wellprofilierungen bezeichnet werden können. Dadurch kann das Material der Weichstoffauflagen 8 und 9 zur Aufarbeitung der Semimetalldichtung 5 leichter von dem Metallkern 15 gelöst werden. Ferner weisen die radial aufeinander folgenden Spitzen 16 der rillenförmigen Profilierungen 10,11 einen Abstand A von 1,0 bis 2,5 mm zueinander auf, wie in der Figur 3 zu erkennen ist. Durch diesen Abstand A wird es erleichtert, das Material der Weichstoffauflagen 8 und 9 auch aus den Rillen R zum Beispiel mittels einer Bürste zu entfernen. Dabei wird das Entfernen der Weichstoffauflagen 8 und 9 weiter erleichtert, indem die Rillen R zwischen den radial aufeinander folgenden Spitzen 16 der rillenförmigen Profilierungen 10,11 eine Tiefe T von 0,2 bis 0,8 mm aufweisen.

Die Semimetalldichtung 5 wird beim Verspannen zwischen den Flanschen 1 und 2 ausschließlich im Bereich der Weichstoffauflagen 8 und 9 verformt, wozu diese aus einem weicheren und entsprechend verformungsfähigeren Material hergestellt sind. Dabei passt sich die Semimetalldichtung 5 mit den Weichstoffauflagen 8 und 9 an die Dichtflächen 6 und 7 dichtend an, und die Weichstoffauflagen 8 und 9 werden gleichzeitig in die rillenförmigen Profilierungen 10 und 11 eingepresst. Aufgrund der vorgeschlagenen Formgebung der rillenförmigen Profilierungen 10 und 11 liegt die Semimetalldichtung 5 dabei mit dem Dichtabschnitt 12 mit einer sehr hohen Flächenpressung an den Dichtflächen 6 und 7 an, während sie in dem radial äußeren Abschnitt 13 und in dem radial inneren Abschnitt 21 mit einer sehr viel geringeren Flächenpressung an den Dichtflächen 6 und 7 anliegt. Damit liegt die Semimetalldichtung 5 über ihre gesamte radiale Erstreckung an den Dichtflächen 6 und 7 der Flansche 1 und 2 an, so dass diese vor einer Verunreinigung, Korrosion oder mechanischen Beschädigung geschützt sind. Damit entfällt der Aufarbeitungsaufwand der Flansche 1 und 2 beim Austausch der Semimetalldichtung 5 gegen eine neue oder aufgearbeitete Semimetalldichtung 5.

Der Metallkern 15 der Semimetalldichtung 5 wird beim Verspannen der Semimetalldichtung 5 nicht verformt, und bildet den formstabilen Kern der Semimetalldichtung 5, welcher durch seine Formgebung mit den rillenförmigen Profilierungen 10 und 11 die Flächenpressungen im Bereich des Dichtabschnittes 12 und in den radial äußeren Abschnitt 13 und in dem radial inneren Abschnitt 21 definiert.

## Patentansprüche

1. Semimetalldichtung (5) mit
- einem formstabilen ringförmigen scheibenförmigen Metallkern (15), welcher
- auf den seitlichen Oberflächen jeweils eine rillenförmigen Profilierung (10,11) mit einer Vielzahl von Spitzen (16) vorgesehen ist, wobei
- auf den rillenförmigen Profilierungen (10,11) eine Weichstoffauflage (8,9) aus einem im Vergleich zu dem Metallkern (15) weicheren Werkstoff vorgesehen ist,
und
- sich die rillenförmigen Profilierungen (10,11) an den seitlichen Oberflächen bis hin zu der Radialaußenseite (17) des Metallkerns (15) erstrecken,
- die in Richtung zur Radialaußenseite (17) hin aufeinanderfolgenden Spitzen (16) der rillenförmigen Profilierungen (10,11) ausgehend von einem Dichtabschnitt (12) in Richtung zur Radialaußenseite (17) eine in Bezug zu einer Mittenebene (M) des Metallkerns (15) abnehmende Höhe (H) aufweisen, und
- der Metallkern (15) mit seiner Radialaußenseite (17) einen Zentrierdurchmesser der Semimetalldichtung (5) bildet, **dadurch gekennzeichnet, dass**
- die Spitzen (16) der rillenförmigen Profilierungen (10,11) im Querschnitt eine Wellenform mit einem Radius (R1) von 0,4 bis 0,8 mm aufweisen, und
- die radial aufeinander folgenden Spitzen (16) der rillenförmigen Profilierungen (10,11) einen Abstand (A) von 1,0 bis 2,5 mm zueinander aufweisen, und
- die Rillen (R) zwischen den radial aufeinander folgenden Spitzen (16) der rillenförmigen Profilierungen (10,11) eine Tiefe (T) von 0,2 bis 0,8 mm aufweisen.

2. Semimetalldichtung (5) nach Anspruch 1, **dadurch gekennzeichnet, dass**
- die Weichstoffauflage (8,9) eine konstante Dicke zu dem Metallkern (15) aufweist.

3. Semimetalldichtung (5) nach einem der Ansprüche 1 oder 2,
**dadurch gekennzeichnet, dass**
- die gemittelte Dicke der Weichstoffauflage (8,9) zu dem Metallkern (15) hin größer ist als die Differenz der Höhen (H) der Spitzen (16) des Dichtabschnitts (12) zu den Höhen (H) der Spitzen (16) in dem radial äußeren Abschnitt (13) des Metallkerns (15).

4. Semimetalldichtung (5) nach einem der Ansprüche 1 bis 3,
**dadurch gekennzeichnet, dass**
- die Differenz der Höhen (H) der Spitzen (16) des Dichtabschnitts (12) zu den Höhen (H) der Spitzen (16) in dem radial äußeren Abschnitt (13) des Metallkerns (15) bevorzugt 0,1 bis 0,3 mm beträgt.

5. Semimetalldichtung (5) nach einem der Ansprüche 1 bis 4,
**dadurch gekennzeichnet, dass**
- die Dicke der Weichstoffauflage (8,9) größer ist als die maximale Tiefe (T) zwischen den Spitzen (16) der rillenförmigen Profilierung (10,11).

6. Semimetalldichtung (5) nach einem der Ansprüche 1 bis 5,
**dadurch gekennzeichnet, dass**
- der Metallkern (15) ausgehend von dem Dichtabschnitt (12) zur Radialaußenseite (17) und/oder zur Radialinnenseite (14) hin eine abnehmende Dicke aufweist.

7. Semimetalldichtung (5) nach einem der Ansprüche 1 bis 5,
**dadurch gekennzeichnet, dass**
- der Metallkern (15) ausgehend von dem Dichtabschnitt (12) zur Radialaußenseite (17) und zur Radialinnenseite (14) hin eine abnehmende Dicke aufweist, und
- der Abschnitt, in dem die Dicke des Metallkerns (15) ausgehend von dem Dichtabschnitt (12) zur Radialaußenseite (17) hin abnimmt eine größere radiale Erstreckung aufweist als der Abschnitt, in dem die Dicke des Metallkerns (15) ausgehend von dem Dichtabschnitt (12) zur Radialinnenseite hin abnimmt.

8. Semimetalldichtung (5) nach einem der Ansprüche 6 oder 7,
**dadurch gekennzeichnet, dass**
- die Rillen (R) der rillenförmigen Profilierungen (10,11) zwischen den Spitzen (16) eine identische Tiefe (T) aufweisen.

## Claims

1. Semimetal gasket (5) comprising
- a dimensionally stable, annular, disk-shaped metal core (15), which
- on each of the lateral surfaces thereof a groove-shaped profile (10,11) comprising a plurality of peaks (16) is provided,
- a soft material coating (8,9) made of a material softer than the metal core (15) being provided on the groove-shaped profiles (10,11), and
- the groove-shaped profiles (10,11) on the lateral surfaces extending up to the radial outer side (17) of the metal core (15),
- the peaks (16) of the groove-shaped profiles (10,11), which peaks succeed one another toward the radial outer side (17), having a height (H) that decreases, from a sealing portion (12) toward the radial outer side (17), in relation to a central plane (M) of the metal core (15), and
- the metal core (15), by means of its radial outer side (17), forming a centering diameter of the semimetal gasket (5), **characterized in that**
- the peaks (16) of the groove-shaped profiles (10,11) have the cross section of a wave shape with a radius (R1) of 0.4 to 0.8 mm, and
- the radially successive peaks (16) of the groove-shaped profiles (10,11) have a distance (A) from one another of 1.0 to 2.5 mm, and
- the grooves (R) have a depth (T), between the radially successive peaks (16) of the groove-shaped profiles (10,11), of 0.2 to 0.8 mm.

2. Semimetal gasket (5) according to claim 1, **characterized in that**
- the soft material coating (8,9) has a constant thickness relative to the metal core (15).

3. Semimetal gasket (5) according to either of claims 1 or 2,
**characterized in that**
- the average thickness of the soft material coating (8,9) relative to the metal core (15) is greater than the difference between the heights (H) of the peaks (16) of the sealing portion (12) and the heights (H) of the peaks (16) in the radially outer portion (13) of the metal core (15).

4. Semimetal gasket (5) according to any of claims 1 to 3,
**characterized in that**
- the difference between the heights (H) of the peaks (16) of the sealing portion (12) and the heights (H) of the peaks (16) in the radially outer portion (13) of the metal core (15) is preferably 0.1 to 0.3 mm.

5. Semimetal gasket (5) according to any of claims 1 to 4,
**characterized in that**
- the thickness of the soft material coating (8,9) is greater than the maximum depth (T) between the peaks (16) of the groove-shaped profile (10,11).

6. Semimetal gasket (5) according to any of claims 1 to 5,
**characterized in that**
- the metal core (15) has a thickness that decreases from the sealing portion (12) toward the radial outer side (17) and/or toward the radial inner side (14).

7. Semimetal gasket (5) according to any of claims 1 to 5,
**characterized in that**
- the metal core (15) has a thickness that decreases from the sealing portion (12) toward the radial outer side (17) and toward the radial inner side (14), and
- the portion in which the thickness of the metal core (15) decreases from the sealing portion (12) toward the radial outer side (17) has a greater radial extent than the portion in which the thickness of the metal core (15) decreases from the sealing portion (12) toward the radial inner side.

8. Semimetal gasket (5) according to either of claims 6 or 7,
**characterized in that**
- the grooves (R) of the groove-shaped profiles (10,11) have an identical depth (T) between the peaks (16).

## Revendications

1. Joint semi-métallique (5) comportant :
- un noyau métallique annulaire en forme de disque (15) dimensionellement stable, lequel
- sur les surfaces latérales, est respectivement prévu un profilage en forme de rainures (10, 11) avec une pluralité de sommets (16), dans lequel
- sur les profilages en forme de rainures (10, 11) est prévu un support en matériau souple (8, 9) constitué d'un matériau plus souple que le noyau métallique (15), et
- les profilages en forme de rainures (10,11) sur les surfaces latérales s'étendent jusqu'au côté extérieur radial (17) du noyau métallique (15),
- les sommets (16) des profilages en forme de rainures (10, 11) successifs en direction du côté extérieur radial (17), à partir d'une partie d'étanchéité (12) en direction du côté extérieur radial (17), ont une hauteur (H) décroissante par rapport à un plan médian (M) du noyau métallique (15), et
- le noyau métallique (15) avec son côté extérieur radial (17) forme un diamètre de centrage du joint semi-métallique (5),
**caractérisé en ce que**
- les sommets (16) des profilages en forme de rainures (10, 11) ont une forme ondulée en coupe transversale avec un rayon (R1) de 0,4 à 0,8 mm, et
- les sommets radialement successifs (16) des profilages en forme de rainures (10, 11) ont une distance (A) de 1,0 à 2,5 mm les uns par rapport aux autres, et
- les rainures (R) entre les sommets radialement successifs (16) des profilages en forme de rainures (10, 11) ont une profondeur (T) de 0,2 à 0,8 mm.

2. Joint semi-métallique (5) selon la revendication 1, **caractérisé en ce que**
- le support en matériau souple (8, 9) a une épaisseur constante jusqu'au noyau métallique (15).

3. Joint semi-métallique (5) selon l'une quelconque des revendications 1 ou 2, **caractérisé en ce que**
- l'épaisseur moyenne du support en matériau souple (8, 9) jusqu'au noyau métallique (15) est supérieure à la différence entre les hauteurs (H) des sommets (16) de la partie d'étanchéité (12) et les hauteurs (H) des sommets (16) dans la partie radialement extérieure (13) du noyau métallique (15).

4. Joint semi-métallique (5) selon l'une quelconque des revendications 1 à 3, **caractérisé en ce que**
- la différence entre les hauteurs (H) des sommets (16) de la partie d'étanchéité (12) et les hauteurs (H) des sommets (16) dans la partie radialement extérieure (13) du noyau métallique (15) est de préférence de 0,1 à 0,3 mm.

5. Joint semi-métallique (5) selon l'une quelconque des revendications 1 à 4, **caractérisé en ce que**
- l'épaisseur du support en matériau souple (8, 9) est supérieure à la profondeur maximale (T) entre les sommets (16) du profilage en forme de rainures (10, 11).

6. Joint semi-métallique (5) selon l'une quelconque des revendications 1 à 5, **caractérisé en ce que**
- le noyau métallique (15), à partir de la partie d'étanchéité (12) jusqu'au côté extérieur radial (17) et/ou jusqu'au côté intérieur radial (14), a une épaisseur décroissante.

7. Joint semi-métallique (5) selon l'une quelconque des revendications 1 à 5, **caractérisé en ce que**
- le noyau métallique (15), à partir de la partie d'étanchéité (12) jusqu'au côté extérieur radial (17) et jusqu'au côté intérieur radial (14), a une épaisseur décroissante, et
- la partie dans laquelle l'épaisseur du noyau métallique (15) diminue à partir de la partie d'étanchéité (12) jusqu'au côté extérieur radial (17) présente une plus grande extension radiale que la partie dans laquelle l'épaisseur du noyau métallique (15) diminue à partir de la partie d'étanchéité (12) jusqu'au côté intérieur radial.

8. Joint semi-métallique (5) selon l'une quelconque des revendications 6 ou 7, **caractérisé en ce que**
- les rainures (R) des profilages en forme de rainures (10,11) entre les sommets (16) ont une profondeur identique (T).
